Europäisches Patentamt

European Patent Office

Office européen des brevets

(11) Veröffentlichungsnummer: **0 331 878**

**A1**

(12) **EUROPÄISCHE PATENTANMELDUNG**

(21) Anmeldenummer: 89100561.3

(51) Int. Cl.⁴: **A01F 15/14**

(22) Anmeldetag: 13.01.89

(30) Priorität: 05.03.88 DE 3807282

(43) Veröffentlichungstag der Anmeldung:
13.09.89 Patentblatt 89/37

(84) Benannte Vertragsstaaten:
**BE ES FR GB IT NL**

(71) Anmelder: **P.D. Rasspe Söhne GmbH & Co.
KG
Stöcken 17
D-5650 Solingen 1(DE)**

(72) Erfinder: **Homberg, Hans-Erich, Dipl.-Ing.
Goldberger Weg 9
D-5650 Solingen 11(DE)**

(74) Vertreter: **Patentanwälte Dipl.-Ing. Walter
Kuborn Dipl.-Phys. Dr. Peter Palgen
Mulvanystrasse 2
D-4000 Düsseldorf(DE)**

(54) **Ballenpresse bzw. Knüpferscheibe.**

(57) An einer Knüpferscheibe (14) für einen Garnknüpfer ist auf der dem Knüpferrahmen abgewandten Seite ein nabenartiger Ansatz (21) mit einer am
Außenumfang ausgebildeten, zur Bohrung (25) koaxialen kreiszylindrischen Lagerfläche (23) vorgesehen, an der die Knüpferscheibe (14) und damit die
Knüpferwelle an einem zwischen den Lagern an den
Enden der Knüpferwelle vorgesehenen Zwischenlager zusätzlich abgestützt werden können.

Fig.2

EP 0 331 878 A1

## Ballenpresse bzw. Knüpferscheibe

Die Erfindung bezieht sich auf eine Ballenpresse der dem Oberbegriff des Anspruchs 1 entsprechenden Art bzw. eine Knüpferscheibe der dem Oberbegriff des Anspruchs 2 entsprechenden Art.

Ballenpressen mit Garnknüpfern werden dazu verwendet, landwirtschaftliche Produkte wie zum Beispiel Stroh und Heu, aber auch andere Materialien wie zum Beispiel Altpapier zu rechteckigen Ballen zusammenzupressen und mit Garn zu umwinden, damit der Ballen seinen Zusammenhalt behält. Das Garn führt in geschlossenen Schlingen um den Ballen und wird von Garnknüpfern geknotet.

Bis vor einiger Zeit betrug die Breite der quaderförmigen Ballen bis 6o cm, und es wurden überwiegend auf der Knüpferwelle zwei Garnknüpfer nebeneinander angeordnet. Inzwischen sind aber Bestrebungen realisiert worden, die Ballen zu vergrößern. Die Ballenbreite wurde dabei bis zu 1,40 m gesteigert, wobei natürlich zwei Garnbindungen nicht ausreichen, um einen derart großen Ballen, der mit erheblichem Druck zusammengepreßt ist, zusammenzuhalten. Bei sogenannten Großballenpressen sind vielmehr vier oder auch bis zu sechs Garnknüpfer nebeneinander auf der Knüpferwelle vorgesehen.

Die Knüpferwelle erfährt durch den quer zu ihrer Achse wirkenden Garnzug und variierende Antriebsmomente der Knüpferbestandteile Garnhalterung, Knüpferhaken und Messerhebel während des Knüpfvorganges erhebliche Querbelastungen, die dazu führen, daß bei mehreren Garnknüpfern starke Durchbiegungen der Knüpferwelle auftreten. Es wäre natürlich grundstäzlich möglich, die Knüpferwelle entsprechend stark zu bemessen, doch müßten dann auch die Durchlässe im Rahmen der Garnknüpfer und die Bohrungen der Knüpferscheibe geändert werden, so daß verschiedene Sorten von Garnknüpfern auf Vorrat gehalten werden oder völlig neue größere Knüpfer konstruiert werden müßten. Dies soll möglichst vermieden werden.

Es ist bereits bekannt, im mittleren Bereich einer längeren Knüpferwelle zwischen der Knüpferscheibe und dem benachbarten Knüpferrahmen eine Abstützung angreifen zu lassen, die in der bekannten Ausführung die Form einer flachen Blechplatte mit einer dem Durchmesser der Knüpferwelle entsprechenden Bohrung aufwies, die irgendwo auf dem Pressenkanal befestigt war.

Eine Mehrzahl solcher Stützplatten erfordert in Längsrichtung der Knüpferwelle Platz und ist im übrigen wegen der schmalen Auflagefläche überaus verschleißanfällig, sei es,daß die Bohrung sich erweitert, sei es, daß in die Knüpferwelle eine Umfangsnut eingearbeitet wird.

Der Erfindung liegt die Aufgabe zugrunde, eine verschleißärmere Abstützung für eine längere Knüpferwelle zu finden.

Diese Aufgabe wird in dem auf die Ballenpresse bezogenen Aspekt durch die in Anspruch 1 wiedergegebene Erfindung gelöst.

Die Lagerfläche an dem Ansatz der Knüpferscheibe kann eine gewisse Breite aufweisen und hat einen größeren Durchmesser als die Knüpferwelle. Es ergibt sich also eine großflächige Lagerfläche mit geringer Flächenpressung und entsprechend verringertem Verschleiß.

Es muß nicht jeder von mehreren Garnknüpfern an seiner Knüpferscheibe eine solche Lagerfläche aufweisen; es kann schon genügen, eine zusätzliche Abstützung nur an einem oder einigen im mittleren Bereich angeordneten Knüpferscheiben vorzusehen.

In dem auf die Knüpferscheibe bezogenen Aspekt verwirklicht sich die Erfindung in den in Anspruch 2 wiedergegebenen Merkmalen.

In der Zeichnung ist ein Ausführungsbeispiel der Erfindung dargestellt.

Fig. 1 zeigt eine Ansicht von oben auf den Knüpferbereich einer Ballenpresse;

Fig. 2 zeigt einen durch die Achse gehenden Schnitt durch eine erfindungsgemäße Knüpferscheibe.

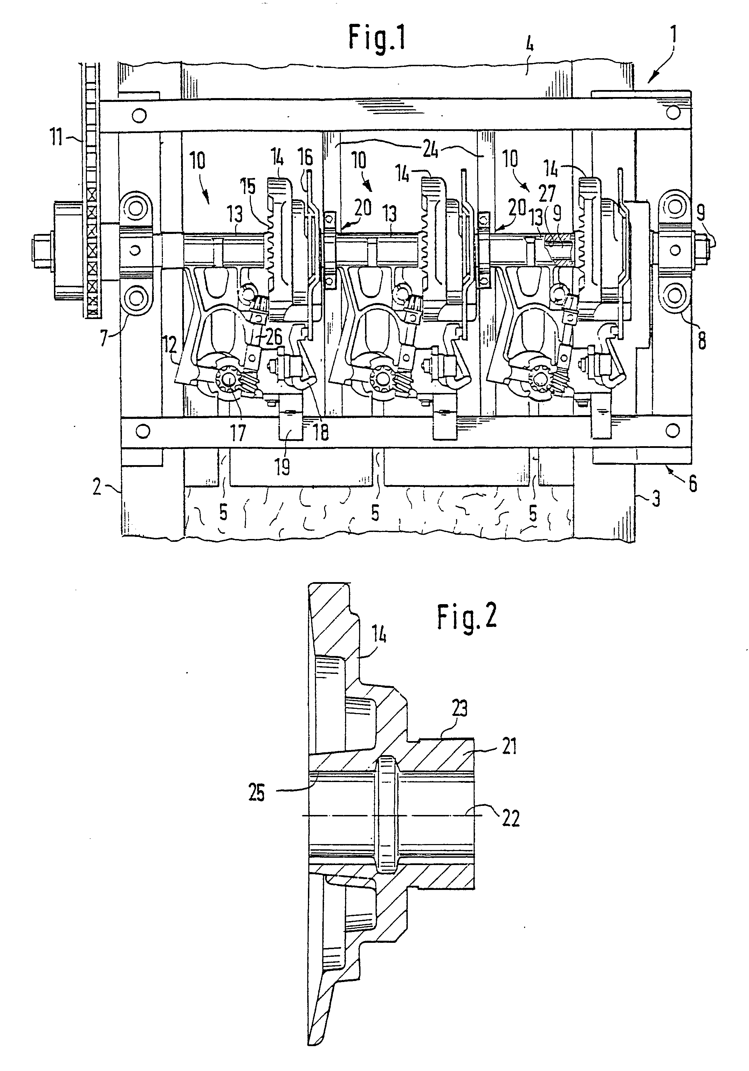

In Fig. 1 ist ein Abschnitt des als Ganzes mit1 bezeichneten Pressenkanals dargestellt, der Seitenwände 2,3 sowie eine obere Abdeckung 4 aufweist, die an den Stellen 5 Schlitze für den Durchtritt der nicht dargestellten von unten hochkommenden Knüpfernadeln aufweist, die das Ende der einen gebildeten Ballen umschlingenden Garnschlinge an jeweils einen Garnknüpfer 10 heranbringen, wo es mit dem anderen vom Garnknüpfer 10 festgehaltenen Ende verknotet wird. In dem Ausführungsbeispiel sinddrei Garnknüpfer 10 nebeneinander angeordnet. Auf einer geeigneten Stützkonstruktion 6, die oben auf dem Pressenkanal 1 befestigt ist, sind Lagerböcke 7,8 angebracht, in denen eine Knüpferwelle 9 quer zum Pressenkanal 1 parallel zur oberen Wandung 4 des Pressenkanals 1 mit Abstand oberhalb derselben gelagert ist. Die Knüpferwelle 9 ist, wenn es an die Bildung eines Knotens geht, über eine Kette 11 intermittierend jeweils um eine Umdrehung antreibbar.

Jeder der Garnknüpfer 10 umfaßt einen Knüpferrahmen 12 mit einer Nabe 13, in deren Bohrung 27 sich die Knüpferwelle 9 frei drehen kann. Neben dem Knüpferrahmen 13 ist die jeweils zugehörige Knüpferscheibe 14 angeordnet, die mit der Knüpferwelle 9 drehfest verbunden ist und eine oder mehrere Teilverzahnungen 15 sowie Führungskurven 16 aufweist, mittels deren die an dem Knüpferrahmen 12 gelagerten Knotenbildungselemente bei der Umdrehung der Knüpferscheibe 14 angetrieben werden. Die Teilverzahnung 15 greift über eine Ritzelwelle 26 an der sich in dem Ausführungsbeispiel etwa senkrecht zur Zeichenebene erstreckenden Mitnehmerwelle 17 an, an der unten (in der Zeichnung nicht sichtbar) der Mitnehmer angebracht ist. Die Kurvenscheibe 16 dient zur Betätigung des Abstreifers bzw. Messerhebels 18.

Wie aus Fig. 1 ersichtlich ist, greift die Knüpferwelle 9, mit der die drei Knüpferscheiben 14 drehfest verbunden sind, durch sämtliche Naben 13 und Knüpferscheiben 14 hindurch. Die Garnknüpfer 10 werden also von der Knüpferwelle 9 getragen. Die Knüpferrahmen 12 sind gegen Drehung durch Stützböcke 19 gesichert, die an der Stützkonstruktion 6 angreifen.

Die Garnknüpfer 10 erfahren den Garnzug, der bei einer strammen Bindung und bei größeren Ballen erheblich sein kann. Der Garnzug wirkt quer zur Knüpferwelle 9 auf die darauf sitzenden Garnknüpfer 10 und verursacht ein erhebliches Biegemoment auf die Knüpferwelle 9,die recht lang ist und sich normalerweise nur in den beiden seitlichen Lagerböcken 7,8 abstützen kann.

Das Problem der Durchbiegung der Knüpferwelle 9 verstärkt sich noch, wenn statt der in dem Ausführungsbeispiel dargestellten drei Garnknüpfer vier oder gar sechs auf ein und derselben Knüpferwelle 9 angeordnet sind.

Um der Durchbiegung entgegenzuwirken, sind an dem ersten und dem zweiten Garnknüpfer 10 von links gemäß Fig. 1 Zwischenlager 20 vorgesehen, die durch Lagerböcke gebildet sind, die auf der Pressenkonstruktion fest abgestützt sind und in die die benachbarten Knüpferscheiben 14 mit einem nach der dem zugehörigen Knüpferrahmen 12 abgelegenen Seite hin vorspringenden axialen nabenartigen Ansatz 21 eingreifen, der auf seinem Außenumfang eine zylindrische, zur Achse 22 der Bohrung 25 der Knüpferscheibe 14 koaxiale Lagerfläche 23 bildet. Es kann sich um eine Gleitlagerfläche handeln, doch ist es auch nicht ausgeschlossen, auf der Lagerfläche 23 ein geschlossenes Wälzlager anzuordnen.

Die Abstützung der Zwischenlager 20 kann auf der oberen Wandung 4 des Pressenkanals oder auch an mit der Stützkonstruktion verbundenen speziellen Stützen 24 erfolgen, die unter der Knüpferwelle 9 mit dem nötigen Abstand in Längsrichtung des Pressenkanals 1 hindurchgehen. Durch die Zwischenlager 20 werden die auf die Garnknüpfer 10 wirkenden Querkräfte unmittelbar von der Knüpferscheibe über eine große und spezifisch wenig belastete Lagerfläche 23 in die Pressenkonstruktion abgeleitet, ohne daß die Knüpferwelle 9 von den entsprechenden Biegemomenten beansprucht wird.

## Ansprüche

1. Ballenpresse mit Garnbindung,
mit einem Pressenkanal,
mit einer das Ballenmaterial in dem Pressenkanal in dessen Längsrichtung zu einem Ballen zusammenpressenden Preßeinrichtung,
mit einer parallel zu einer Wandung des Pressenkanals quer zu diesem an dem Pressenkanal im Bereich der Seitenwände gelagerten Knüpferwelle,
mit einem oder mehreren über die Breite des Pressenkanals verteilten, nebeneinander auf der Knüpferwelle angeordneten, intermittierend angetriebenen Knüpferscheiben zum Antrieb mit ihrem Knüpferrahmen ebenfalls auf der Knüpferwelle gelagerter Garnknüpfer
und mit mindestens einer zwischen den Seitenwänden angeordneten weiteren Abstützung für die Knüpferwelle,
dadurch gekennzeichnet,
daß die weitere Abstützung eine auf der dem Knüpferrahmen (12) abgewandten Seite an einem nabenartigen Ansatz (21) der Knüpferscheibe (14) ausgebildete, zur Bohrung (25) der Knüpferscheibe (14) koaxiale kreiszylindrische Lagerfläche (23) umfaßt, die in einem an dem Pressenkanal (1) fest angeordneten Zwischenlager (20) gelagert ist.

2. Knüpferscheibe für einen Garnknüpfer mit einer zentralen Bohrung für den Durchtritt der Knüpferwelle, dadurch gekennzeichnet, daß auf der dem Knüpferrahmen (12) abgewandten Seite der Knüpferscheibe ein nabenartiger axialer Ansatz (21) mit einer am Außenumfang ausgebildeten, zur Bohrung (25) koaxialen kreiszylindrischen Lagerfläche (23) vorgesehen ist.

# Fig.1

# Fig.2

Europäisches Patentamt

EUROPÄISCHER RECHERCHENBERICHT

Nummer der Anmeldung

EP 89 10 0561

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2853885 (SELTZER)<br>* Spalte 2, Zeile 64 - Zeile 69; Figur 1 *<br>--- | 1 | A01F15/14 |
| A | DE-A-3237306 (MARTIN)<br>* Seite 6, Zeile 15 - Zeile 26; Figuren 1, 2 *<br>----- | 1 | |
| | | | **RECHERCHIERTE SACHGEBIETE (Int. Cl.4)**<br><br>A01F |

Der vorliegende Recherchenbericht wurde für alle Patentansprüche erstellt

| Recherchenort | Abschlußdatum der Recherche | Prüfer |
|---|---|---|
| DEN HAAG | 14 JUNI 1989 | VERMANDER R.H. |